# EUROPEAN PATENT APPLICATION

(11) **EP 0 966 121 A2**
(43) Date of publication of application: **22.12.1999**
(21) Application number: 99304718.2
(22) Date of filing: 16.06.1999
(51) Int. Cl.: H04H 1/00

(54) **Receiver for receiving digital broadcast programmes transmitted on a plurality of channels, comprising a plurality of receiving circuits**

(30) Priority: 19.06.1998 JP 17300998
(71) Applicant: SONY CORPORATION, Tokyo 141 (JP)
(72) Inventor: Matsuura, Yoko, c/o Sony Corporation, Tokyo 141 (JP); Yamazaki, Tomotaka, c/o Sony Corporation, Tokyo 141 (JP)
(74) Representative: Turner, James Arthur

(57) **Abstract**

A first receiving circuit performs receiving processing for selection information and program information. A CPU always extracts a parameter required for program selection from various tables obtained by a first demultiplexer (DMX) in the first receiving circuit, and always creates the latest data base. When a program selection instruction is input to the CPU, the frequency (parameter A) of the transponder in which the program is disposed is obtained from the latest selection information already obtained by the first DMX, and the frequency is set in a second tuner. The PIDs (parameters B) of the video elementary stream (ES) and the audio ES of the program are obtained from the latest selection information of the program, and the PIDs are set in a descrambler and a second DMX.

## Description

The present invention relates to digital broadcasting receivers, selection methods therefor, and data transmission methods.

Digital satellite broadcasting has been widely spread. Compared with analog broadcasting, digital satellite broadcasting is immune to noise and fading, and allows high-quality signal transmission. In addition, multiple channels can be used. Programs on a number of special channels have been broadcasted, such as a movie channel, a sport channel, a news channel, and a music channel.

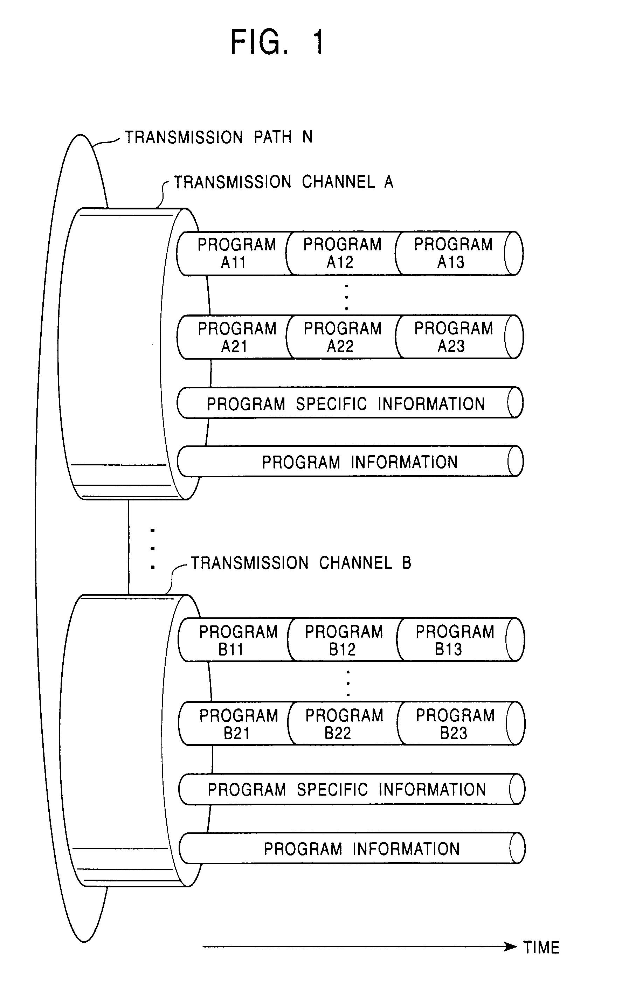

Fig. 1 is a view showing structures of transmission channels and programs in conventional digital satellite broadcasting. In this figure, a transmission path N corresponds to a band in which transmission is allowed with the use of one communication satellite. Within this transmission path N, a plurality of transmission channels are provided. In digital satellite broadcasting, one of transmission channels A, B, etc. corresponds to one transponder. In each transmission channel, a plurality of programs are distributed at the same time. Selection information (PSI: program specific information) for selecting programs transmitted through the transmission path N and program information indicating the contents of the programs are multiplexed with the programs and transmitted through each transmission channel. In conventional digital satellite broadcasting based on an MPEG-2 system, for example, a plurality of programs are distributed at the same time in each transponder. One communication satellite is provided with a plurality of such transponders.

A procedure for the audience to select the desired program among programs transmitted through the transmission path N shown in Fig. 1 will be described below. While the audience is watching an electronic program guide (EPG) screen created by a digital satellite broadcasting receiver according to the program information, the audience inputs an instruction to select, for example, a program A11 with the use of a remote commander for the digital satellite broadcasting receiver. The digital satellite broadcasting receiver determines whether the program A11 is being transmitted through the transmission channel currently being received by referring to the selection information. When it is determined that the program A11 is being transmitted through the transmission channel currently being received, the video data and the audio data of the program in the transmission channel are separated and decoded. When it is determined that the program A11 is not being transmitted through the transmission channel currently being received, the transponder is switched to the transponder for a transmission channel A1, and the video data and the audio data of the program A11 are separated and decoded.

Since a conventional digital satellite broadcasting receiver is provided with only one tuner, only the program information and the selection information transmitted through the transmission channel (hereinafter called a self channel) which the tuner is currently selecting are obtained. Therefore, to obtain program information transmitted through another transmission channel (hereinafter called another channel), it is necessary to change the tuner receiving frequency to switch the transponder. In this case, the screen display of the program currently being watched is interrupted and an EPG screen appears. The audience cannot view both of them.

To avoid such a problem to some extent, the minimum program information and the minimum selection information related to programs distributed through each channel are overlappingly broadcasted. This is wasteful from the viewpoint of effective use of a transmission path.

Selection information such as a program association table (PAT) and a program map table (PMT) is disposed only in the corresponding transponder. Therefore, while a program distributed through a transponder is being selected, because a data base for selecting a program distributed through another transponder cannot be created in advance from selection information disposed at the another transponder, when the transponder is switched and a program is selected, it takes a long time to tune in the desired program.

Various respective aspects and features of the invention are defined in the appended claims.

Embodiments of the invention can provide a digital broadcasting receiver and a selection method therefor which enable a selection time to be reduced when the transmission channel is switched to select a program, and a data transmission method which allows an effective use of a transmission path.

Embodiments of the present invention can provide a digital broadcasting receiver and a selection method therefor which allow a selection time required when the transmission channel is switched and a program is selected to be reduced.

Embodiments of the present invention can provide a data transmission method which allows a transmission path to be effectively used when digital broadcasting data is transmitted.

Embodiments of the invention provide a digital broadcasting receiver for receiving digital broadcasting in which a plurality of programs and the selection information and the program information of the plurality of programs are divided and transmitted through a plurality of transmission channels, including a plurality of receiving circuits, wherein a receiving circuit which is not performing receiving processing of the plurality of programs receives the selection information and the program information.

Embodiments of the invention provide a selection method for a digital broadcasting receiver, wherein, when the digital broadcasting receiver receives digital broadcasting in which a plurality of programs and the selection information and the program information of the plurality of programs are divided and transmitted through a plurality of transmission channels, a plurality of receiving circuits are provided for the digital broadcasting receiver, a receiving circuit which is not performing receiving processing of the plurality of programs receives the selection information and the program information to always obtain the latest selection information, and the desired program is selected by the use of the latest selection information when an instruction to select the desired program is input.

Embodiments of the invention provide a data transmission method, wherein, when a plurality of programs and the selection information and the program information of the plurality of programs are divided and transmitted through a plurality of transmission channels, the plurality of programs are transmitted through a transmission channel used only for programs, and the selection information and the program information are transmitted through a transmission channel used only for selection information and program information.

In a digital broadcasting receiver according to an embodiment of the present invention, a receiving circuit which is not performing receiving processing of a program among a plurality of receiving circuits receives selection information and program information to always obtain the latest selection information. When the audience gives a program selection instruction, the desired program is selected with the use of the latest selection information.

According to a digital broadcasting receiver and a selection method therefor according to an embodiment of the present invention, a selection time required when the transmission channel is switched to select a program can be reduced. According to a data transmission method of an embodiment of the present invention, a transmission path can be effectively used when digital broadcasting data is transmitted.

The invention will now be described by way of example with reference to the accompanying drawings, throughout which like parts are referred to by like -references, and in which:

Fig. 1 is a view showing a structure of transmission channels and programs in a conventional digital satellite broadcasting.

Fig. 2 is a view showing signal flows in a transmission channel of a first transponder to which the present invention is applied.

Fig. 3 is a view showing signal flows in a transmission channel of a second transponder to which the present invention is applied.

Fig. 4 is a view showing signal flows in a transmission channel of a third transponder to which the present invention is applied.

Fig. 5 is a block diagram showing a structure of a digital satellite broadcasting receiving system for receiving digital broadcasting shown in Fig. 2 to Fig. 4.

Fig. 6 is a flowchart showing processing for updating the frequency of a transponder in which each program is disposed, from an NIT.

Fig. 7 is a flowchart showing processing for updating a PID table from a PAT.

Fig. 8 is a flowchart showing processing for sending the EMM obtained from a CAT to the IC card.

Fig. 9 is a flowchart showing processing for obtaining a session key for each program.

Fig. 10 is a flowchart showing processing for obtaining and displaying data for an EPG.

Fig. 11 is a flowchart showing processing for setting in a descrambler a session key for the program specified by the audience when the audience inputs an instruction to select the program.

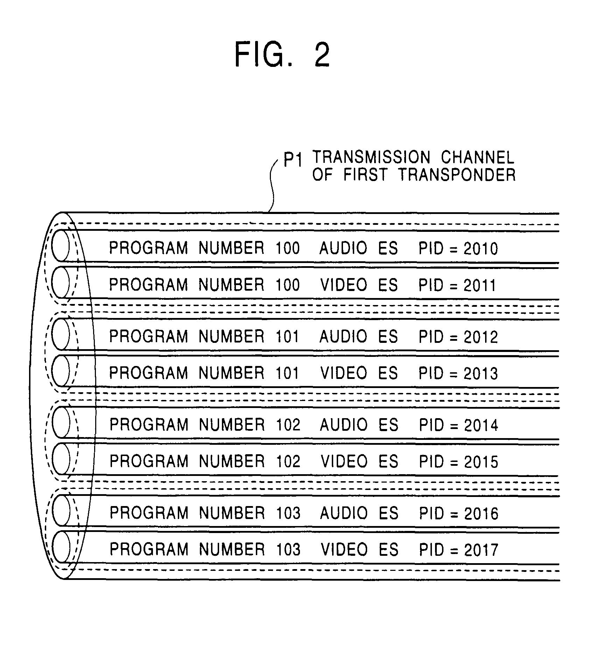

Fig. 2 is a view showing signal flows in a transmission channel P1 of a first transponder.

As shown in the figure, in the transmission channel P1, only the video and audio elementary streams (hereinafter called ESs) of four programs are transmitted. In other words, this transponder is used specially for program ESs. An ES is a packet specified in the MPEG-2 system (ISO/IEC 13818-1). Actually, these ESs are divided into transport packets (hereinafter called TS packets) and transmitted. The four programs have their program numbers 100 to 103. Packet IDs (hereinafter called PIDs) of 2011, 2013, 2015, and 2017 are assigned to the video ESs, and PIDs of 2010, 2012, 2014, and 2016 are assigned to the audio ESs.

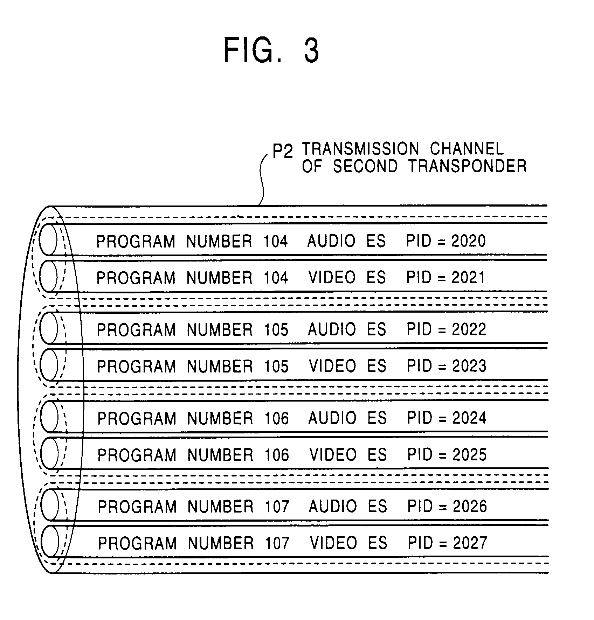

Fig. 3 is a view showing signal flows in a transmission channel P2 of a second transponder.

As shown in the figure, in the transmission channel P2, only the video and audio ESs of four programs are transmitted. This transponder is also used specially for ESs. The four programs have their program numbers 104 to 107. PIDs of 2021, 2023, 2025, and 2027 are assigned to the video ESs, and PIDs of 2020, 2022, 2024, and 2026 are assigned to the audio ESs.

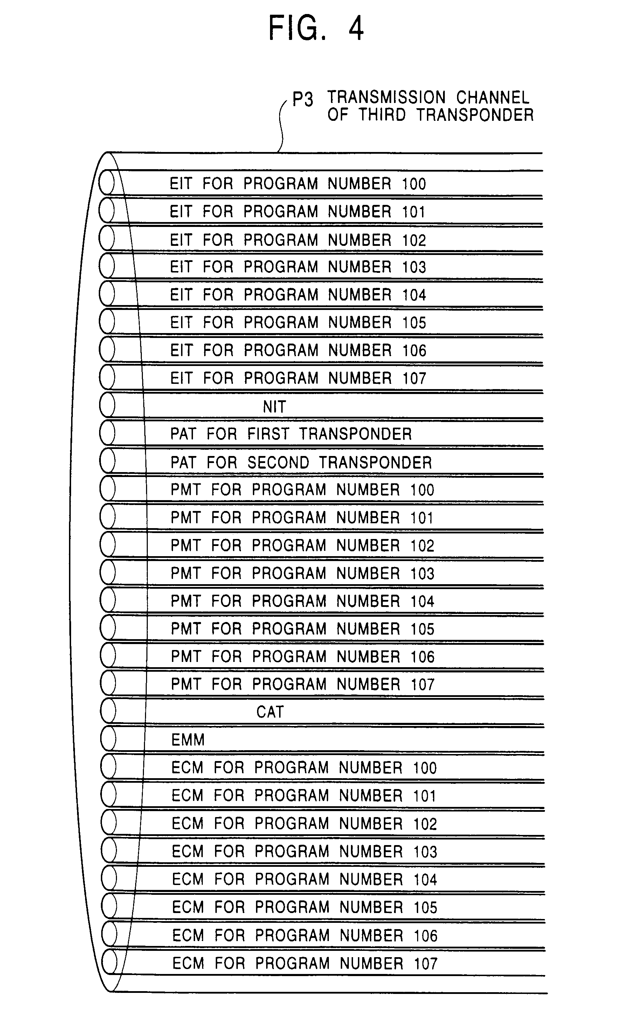

Fig. 4 is a view showing signal flows in a transmission channel P3 of a third transponder.

In this transponder, the program information and the selection information corresponding to the programs transmitted through the first transponder and the second transponder are distributed. The third transponder is specially used for program information and selection information. More specifically, the event information tables (EITs) of the programs 100 to 107, a network information table (NIT), the PATs of the first transponder and the second transponder, the PMTs of the programs 100 to 107, a conditional access table (CAT), an entitlement management message (EMM), and the entitlement control messages (ECMs) of the programs 100 to 107 are distributed.

In the present embodiment, the first and the second transponders distribute programs and the third transponder distributes selection information and program information for the programs.

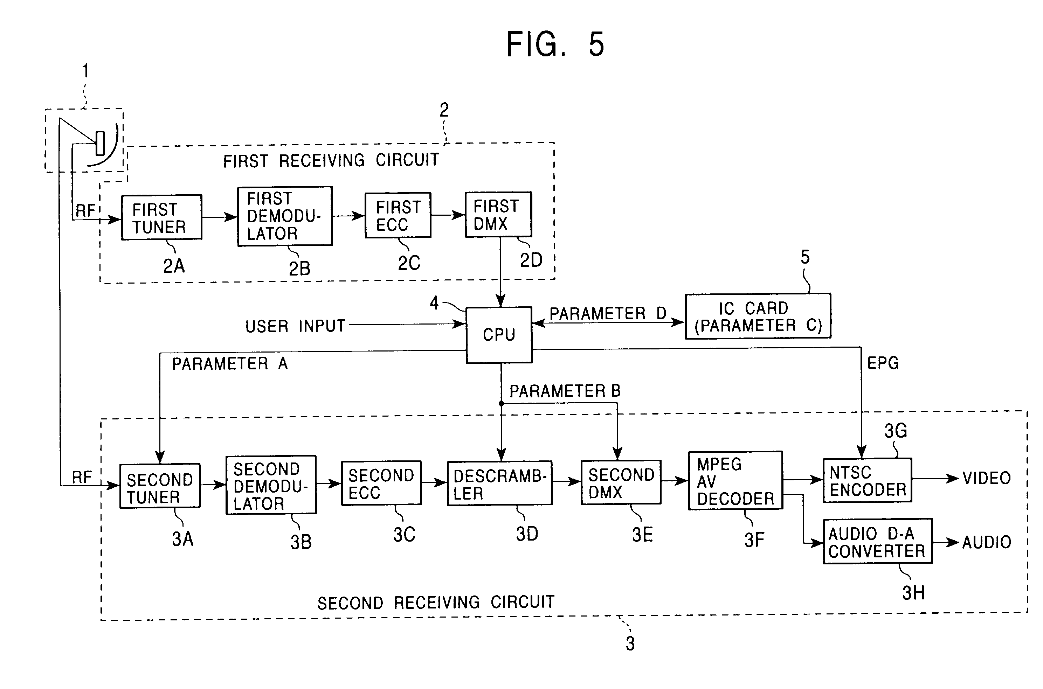

Fig. 5 is a block diagram showing a structure of a digital satellite broadcasting receiving system for receiving digital broadcasting shown in Fig. 2 to Fig. 4. This digital satellite broadcasting receiving system is provided with an antenna and converter 1, a first receiving circuit 2 and a second receiving circuit 3 both connected to the output thereof, a CPU 4 for controlling these receiving circuits, and an IC card 5 for storing information required therefor. A digital broadcasting receiver is formed of the above-described units excluding the antenna and converter 1.

The first receiving circuit 2 includes a first tuner 2A, a first demodulator 2B, a first error correcting circuit (ECC) 2C, and a first demultiplexer (DMX) 2D, and performs receiving processing of the selection information and the program information distributed through the transmission channel P3 of the third transponder.

The second receiving circuit 3 includes a second tuner 3A, a second demodulator 3B, a second ECC 3C, a descrambler 3D, a second DMX 3E, a MPEG audio and video (AV) decoder 3F, an NTSC encoder 3G, and an audio D-A converter 3H, and performs receiving processing of the ESs distributed through the transmission channels P1 and P2 of the first and second transponders.

The CPU 4 is connected to the first receiving circuit 2 and the second receiving circuit 3. With the use of the selection information obtained in the first receiving circuit 2, an user input, and the information stored in the IC card 5, the CPU 4 sends various parameters required for selection in the second receiving circuit 3 to the second receiving circuit 3. The IC card 5 is connected to the CPU 4 and stores information required for descrambling received TSs.

An operation of the digital satellite broadcasting receiving system will be described next.

The antenna and converter 1 receives radio waves sent from a satellite (not shown), separates horizontal and vertical polarized waves, sends an RF signal obtained from a polarized plane on which a transmission signal of the transponder specially used for selection information and program information is disposed, to the first tuner 2A, and sends an RF signal obtained from a polarized plane on which a transmission signal of the transponder specially used for program ESs is disposed, to the second tuner 3A. When a signal of the transponder specially used for selection information and program information and a signal of the transponder specially used for program ESs are disposed on the same polarized plane, they are received, then divided, and sent to the corresponding tuners.

The first tuner 2A locks the frequency on that of the transmission channel of the transponder specially used for selection information and program information, and performs detection. The CPU 4 performs this frequency setting. The first demodulator 2B converts the signal selected by the tuner 2A into a binary signal and performs demodulation. The first ECC 2C applies error correcting processing to the error correcting code applied to a transmission frame. With these types of processing, a data stream on which selection information and program information are multiplexed is reproduced. The data stream is sent to the first DMX 2D.

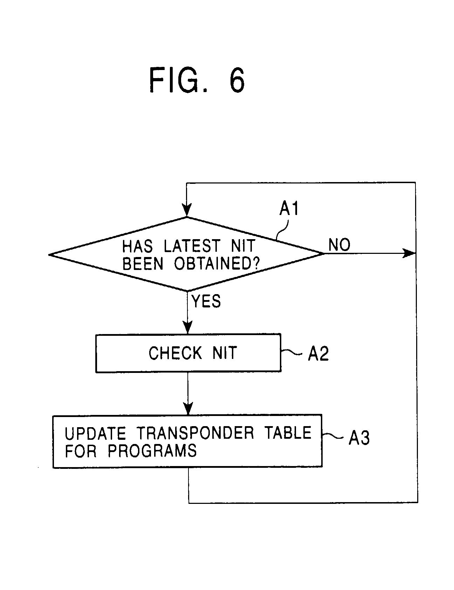

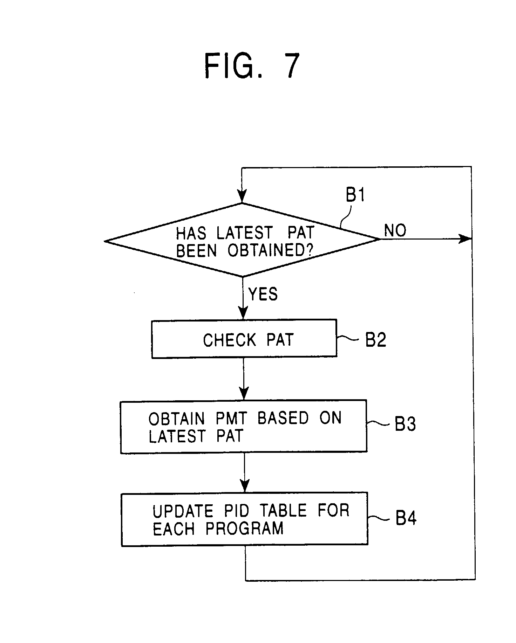

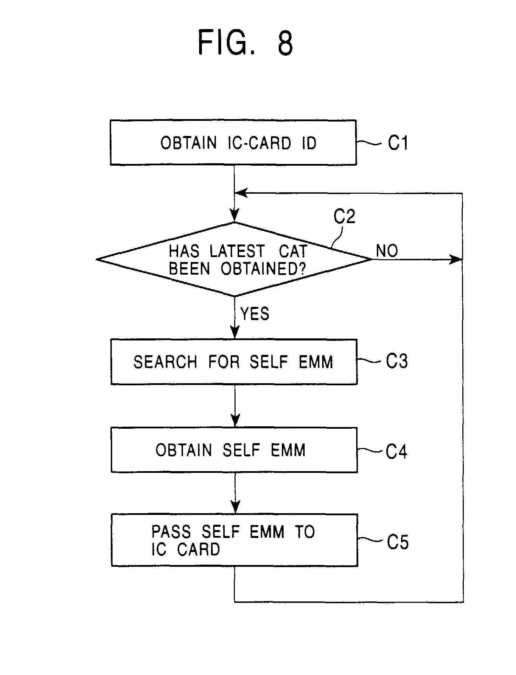

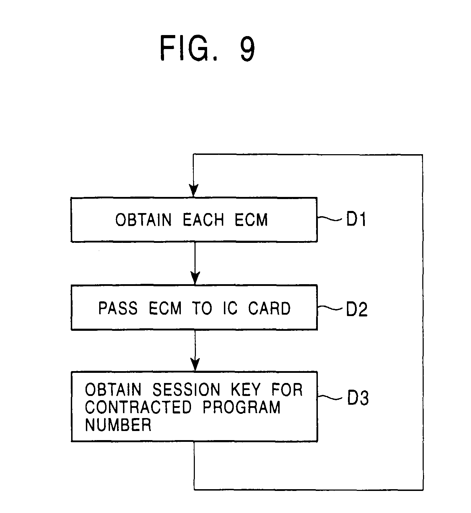

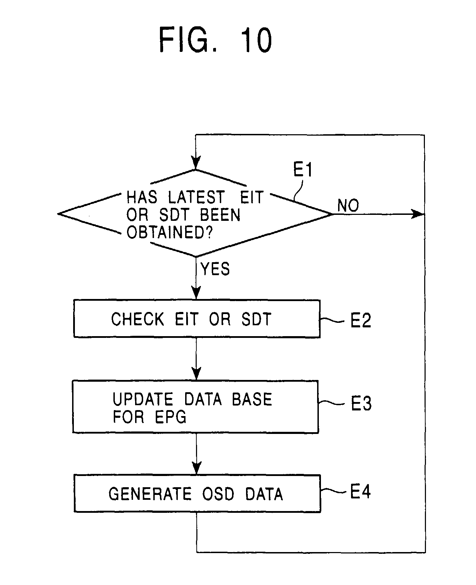

The first DMX 2D divides the data stream into a plurality of tables (such as a PAT, a PMT, an NIT, and a CAT) constituting selection information and program information. The CPU 4 always extracts from various tables parameters required for selecting a program to create the latest data base, and stores it in a memory (not shown) such as a RAM. The latest data base includes the following parameters (1) to (5).
(1): Parameter A, indicating the frequency of a transponder in which programs are disposed.
   This parameter is generated from an NIT. As shown in Fig. 6, it is determined whether the latest IT has been obtained (in a step A1). When it has been obtained, the NIT is checked (in a step A2). A table (transponder table) indicating the frequency of a transponder in which programs are disposed is updated (in a step A3).
(2): Parameter B, indicating the PIDs of the video ES and the audio ES constituting each program.
   This parameter is generated from a PAT and a PMT. As shown in Fig. 7, it is determined whether the latest PAT has been obtained (in a step B1). When it has been obtained, the PAT is checked (in a step B2). The PMT based on the latest PAT is obtained (in a step B3), and then the PID table for each program is updated (in a step B4).
(3): Parameter C, indicating individual contract information.
   This parameter is generated from the EMM obtained from a CAT. As shown in Fig. 8, after the ID of the IC card 5 is obtained (in a step C1), it is determined whether the latest CAT has been obtained (in a step C2). When it has been obtained, a self EMM is searched for by referring to the CAT, and obtained. The self EMM is sent to the IC card 5 (in steps C3 to C5).
(4) : Parameter D, indicating the session key of each program.
   This parameter is generated from the ECM obtained from a PMT. As shown in Fig. 9, after the ECM of each program is obtained (in a step D1), the ECM is sent to the IC card 5 (in a step D2). The ECM is verified in the IC card 5. The IC card 5 sends the session key for a contracted program number to the CPU 4 (in a step D3).
(5): Additional information of each program and schedule.
   This parameter is generated from an EIT and an SDT (service description table). As shown in Fig. 10, it is determined whether the latest EIT or SDT has been obtained (in a step E1). When it has been obtained, the EIT or SDT is checked (in a step E2). A data base for an EPG is updated (in a step E3), and then on-screen display (OSD) data is created (in a step E4).

When a conditional access unit is mounted, since the EMM and ECMs are encrypted, encryption is released in the IC card 5 with the use of information stored in advance in the IC card 5 and the EMM is stored in the IC card 5 as individual contract information. The ECM of each program is verified with the individual contract information in the IC card 5. When an acceptable result is obtained, the encryption is released. The corresponding session key (Ks) is output from the IC card 5 to the CPU 4.

When the audience inputs an instruction to select, for example, the program 100 shown in Fig. 2 into the CPU 4, the CPU 4 obtains the frequency (parameter A) of the transponder where the program 100 is disposed, from the latest selection information of the program 100, already obtained by the first DMX 2D, and sets it in the second tuner 3A. The second tuner 3A selects the transmission channel of the first transponder, the second demodulator 3B demodulates the program, the second ECC 3C applies error correcting processing, and then, the program is input to the descrambler 3D.

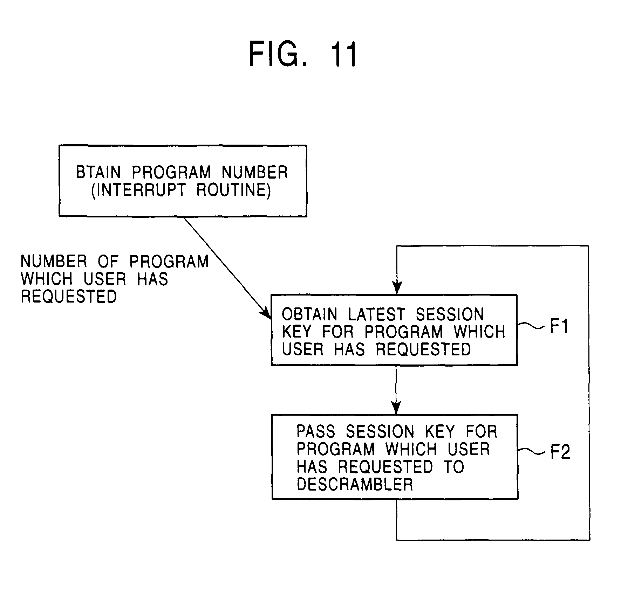

The CPU 4 obtains the PIDs (parameter B) of the video ES and the audio ES constituting the program 100, from the latest selection information of the program 100, already obtained by the first DMX 2D, and sets them in the descrambler 3D and the second DMX 3E. The ECM of the program 100 is sent to the IC card 5 through the CPU 4, and verified with the individual contract information (parameter C). When the contract is authenticated, the session key (parameter D) for releasing the scrambling applied to the video ES and the audio ES of the program 100 is output from the IC card 5. This session key is set in the descrambler 3D through the CPU 4. Fig. 11 is a flowchart showing the processing performed by the CPU 4 in this condition.

The descrambler 3D releases the scrambling applied to the ES having the PIDs specified by the parameter B, extracts the ES for which the scrambling has been released to obtain the original MPEG AV stream, and sends it to the MPEG AV decoder 3F. The stream is decoded therein. The decoded video data and the decoded audio data are sent to the NTSC encoder 3G and the audio D-A converter 3H, respectively. The video data is converted to an NTSC signal, and the audio data is converted to an analog audio signal and output.

As described above, in the digital broadcasting receiving system shown in Fig. 5, since the first receiving circuit 2 has the selection information of all ES transmission channels before the audience inputs a selection instruction, a high-speed selection is allowed. In addition, since the program information is obtained at the same time when the selection information is obtained, even while the second tuner 3A selects, for example, the first transponder, the program information of the programs (104 to 107) distributed through the transmission channel of the second transponder can be obtained. When this program information is processed by the CPU 4 to make OSD information and it is output to the NTSC encoder 3G as OSD data for an EPG, even while the program transmitted by the first transponder is watched, the program and the program information can be always displayed at the same time by overlaying processing on the screen or child-screen processing.

With the use of a digital satellite broadcasting receiving system having the structure shown in Fig. 5, even if a conventional transponder structure is used, when the first tuner 2A sequentially switches the transponder and collects selection information and program information dispersed in the transmission channel of each transponder, a similar high-speed selection is possible although the transmission efficiency is inferior.

In the digital satellite broadcasting receiving system shown in Fig. 5, the first receiving circuit 2 is specially used for receiving processing of selection information and program information, and the second receiving circuit 3 is specially used for ES receiving processing. A digital satellite broadcasting receiving system may be configured such that two receiving circuits can perform all processing for selection information, program information, and ESs (in other words, two systems of receiving circuits used in a conventional digital satellite broadcasting receiver are provided), and, while a program is not watched, selection information and program information are collected to create the latest selection data base. In this case, transponders may be divided to those specially used for ESs, selection information, and program information as shown in Fig. 2 to Fig. 4, or they may have the same structure as in a conventional receiving system.

In the above embodiment, the present invention is applied to digital satellite broadcasting. The present invention can also be applied to digital cable broadcasting and digital terrestrial broadcasting.

## Claims

1. A digital broadcasting receiver for receiving digital broadcasting in which a plurality of programs and the selection information and the program information of the plurality of programs are divided and transmitted through a plurality of transmission channels,
comprising a plurality of receiving circuits,
wherein a receiving circuit which is not performing receiving processing of the plurality of programs receives the selection information and the program information.

2. The digital broadcasting receiver according to Claim 1, further comprising maintaining means, wherein a receiving circuit which is not performing receiving processing of the plurality of programs maintains the selection information and the program information to always maintain the latest selection information.

3. The digital broadcasting receiver according to Claim 1, wherein each of said plurality of receiving circuits has a function for receiving the plurality of programs and a function for receiving the selection information and the program information.

4. The digital broadcasting receiver according to Claim 1, wherein one of said plurality of receiving circuits has a function for receiving only the selection information and the program information.

5. The digital broadcasting receiver according to Claim 1, further comprising means for mixing a program-guide video signal generated by receiving the program information and a program video signal generated by receiving the plurality of programs.

6. The digital broadcasting receiver according to Claim 5, wherein the program video signal is mixed with the program-guide video signal by overlay processing.

7. The digital broadcasting receiver according to Claim 5, wherein the program video signal is mixed with the program-guide video signal by child-screen processing.

8. The digital broadcasting receiver according to Claim 1, wherein a plurality of programs and the selection information and the program information of the plurality of programs are multiplexed and simultaneously transmitted through each of the plurality of transmission channels.

9. The digital broadcasting receiver according to Claim 1, wherein the plurality of programs are transmitted through a transmission channel used only for programs, and the selection information and the program information are transmitted through a transmission channel used only for selection information and program information.

10. A selection method for a digital broadcasting receiver, wherein, when the digital broadcasting receiver receives digital broadcasting in which a plurality of programs and the selection information and the program information of the plurality of programs are divided and transmitted through a plurality of transmission channels, a plurality of receiving circuits are provided for the digital broadcasting receiver, a receiving circuit which is not performing receiving processing of the plurality of programs receives the selection information and the program information to always obtain the latest selection information, and the desired program is selected by the use of the latest selection information when an instruction to select the desired program is input.

11. The selection method for a digital broadcasting receiver according to Claim 10, wherein one of said plurality of receiving circuits performs receiving processing of only the selection information and the program information.

12. A data transmission method, wherein, when a plurality of programs and the selection information and the program information of the plurality of programs are divided and transmitted through a plurality of transmission channels, the plurality of programs are transmitted through a transmission channel used only for programs, and the selection information and the program information are transmitted through a transmission channel used only for selection information and program information.

13. The data transmission method according to Claim 12, wherein a plurality of programs and the selection information and the program information of the plurality of programs are multiplexed and simultaneously transmitted through each of the plurality of transmission channels.
